# EUROPEAN PATENT APPLICATION

(11) **EP 1 187 479 A2**
(43) Date of publication of application: **13.03.2002**
(21) Application number: 01307159.2
(22) Date of filing: 23.08.2001
(51) Int. Cl.: H04N 7/14

(54) **Portable information terminal having camera**

(30) Priority: 29.08.2000 JP 2000258766
(71) Applicant: Sony Corporation, Tokyo 141-0001 (JP)
(72) Inventor: Mishio, Mitsuru, Int. Prop. Dept. Sony Corporation, Tokyo 141-0001 (JP)
(74) Representative: Pilch, Adam John Michael

(57) **Abstract**

A camera body (100) carries a lens (110) fixed on a side face of the camera body (100) and an imaging device, and the camera body (110) can turn/rotate around a horizontal axis of a body section (200). When imaging is not performed, the camera body (100) is turned/rotated such that the side face on which the lens (110) is fixed faces the body section (200) to house the lens inside for protection of the lens. When imaging is performed, the camera body (100) is turned/rotated such that the side face on which the lens (110) is fixed and a side face on which a display section (230) and an operation input section (250) of the body section (200) are provided are in parallel to each other to expose the lens (110) to the outside. When a status such that the lens (110) is directed to the outside so as to enabling imaging is detected, imaging processing using a camera section is started. Moreover, when the lens (110) is retracted or a status in which the lens is unable to operate is detected, imaging processing using the camera section is ended.

## Description

The present invention relates to a portable information terminal including a camera therein, and more particularly to such a portable information terminal incorporating in the same body a camera section for imaging a selected image.

Recently, a camera, a laptop type personal computer, a personal digital assistant (PDA), a mobile telephone or the like has become popular as a portable information terminal carrying an imaging means, such as a digital still camera, a digital video camera or the like.

Such a portable information terminal carries a small camera in the same body. The small camera is placed, for example, in a vacant space on a side face or on a front face of the portable information terminal, or in other spaces, and can be rotated as for enabling change in imaging angles. Moreover, the portable information terminal includes a display section for displaying, for example, an image shot or captured by the camera, and an operation section for operating the camera. The portable information terminal performs its imaging in conformity with an instruction input from an operation section, and displays a shot/captured image on the display section. Moreover, a portable information terminal having a communication function can transmit an image signal to a desired destination by means of the communication function.

However, a conventional portable information terminal carrying a camera has a problem that the camera cannot be conveniently used.

Cameras to be carried in a portable information terminal are usually small and have reduced functions. Consequently, when considering protection against weather conditions, damage and the like, it is desirable to provide a way of retracing/hiding the camera section inside the body or even covering the lens when the camera is not used. Accordingly, various methods have been adopted for retracting/hiding/covering the camera when it is not used.

Then, it is necessary to take out the retracted/hidden/covered camera when it is to be used. Moreover, it is necessary to display a menu screen and perform a starting operation with its operation section for starting up of the camera. As described above, the camera carried in the conventional portable information terminal has a problem such as an expanded time is required until the starting of the camera and thus the camera cannot be easily and promptly handled.

The present invention was made in view of such problem and, according to a preferred embodiment thereof, a portable information terminal is provided so as to allow easy handling of a camera carried on a same body thereof.

According to the preferred embodiment of the present invention, there is provided a portable information terminal carrying a camera, the terminal carrying in a same body a camera section capable of imaging an arbitrary image, the terminal including a first body carrying the camera section having a lens fixed on a designated side face and an imaging device imaging device, and a second body including a detection means for detecting a position of the side face on which the lens of the camera section is fixed, and a imaging control means for controlling imaging using the camera section according to a detection result of the detection means; the first body is supported by the second body so as to rotate around a horizontal axis of the second body.

In the portable information terminal carrying the camera and having such a configuration, the camera section including the lens and the imaging device is carried in the first body. The lens is fixed on a side face of the first body, and imaging of an image is performed by the imaging device provided inside the first body corresponding to the lens. Moreover, the first body is supported by the second body so as to rotate around the horizontal axis of the second body. The second body detects the position of the side face on which the lens of the first body is fixed by means of the detection means. The imaging control means performs the control of imaging using the camera section according to the detection result of the detection means.

As described above, in the preferred embodiment of the present invention, a camera section is carried in a first body. The first body is axially supported by a second body so as to rotate around a horizontal axis of the second body. A lens fixed on a side face of the first body changes its positional relation to the second body by the rotation of the first body. The position of the side face is detected for the control of imaging using the camera section according to the result of detection.

Also, it is detected whether the lens of the camera section carried in the first body is placed at a position in which the imaging is possible or not. Then, the control of the imaging processing is performed according to the result of the detection. Because the imaging processing is automatically controlled only by rotation of the first body and the change of the position of the side face on which the lens is fixed, it is needless to input an instruction by the opening of a menu. As a result, the camera carried in the portable information terminal can be used in an easily fashion.

The invention will now be described by way of example with reference to the accompanying drawings, throughout which like parts are referred to by like references, and in which:
FIG. 1 is a perspective view of a mobile telephone carrying a camera, according to a preferred embodiment of the present invention;
FIG. 2 is a block diagram of the mobile telephone carrying the camera, according to a preferred embodiment of the present invention; and
FIG. 3A, FIG. 3B and FIG. 3C are diagrams describing rotation of the camera section of the portable information terminal carrying a camera and the detection means thereof, according to a preferred embodiment of the present invention.

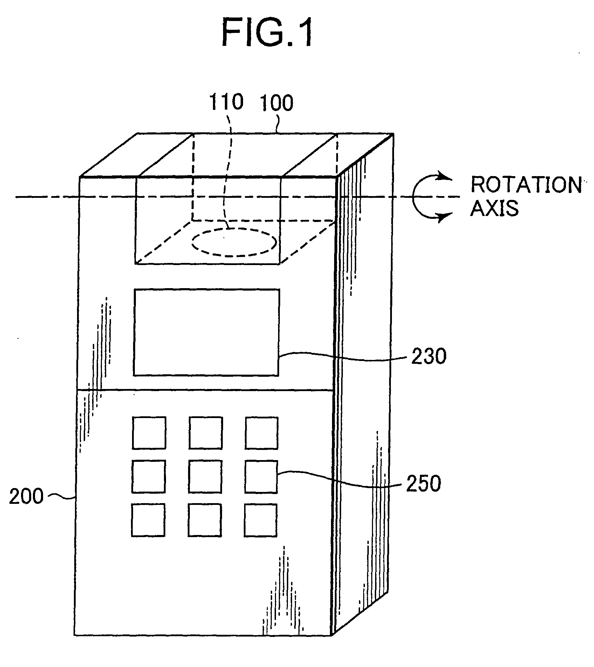

A preferred embodiment of the present invention is described in the following by reference to the attached drawings. Descriptions are given to an embodiment of a mobile telephone carrying a camera as a portable information terminal carrying an imaging apparatus. FIG. 1 is a perspective view of such mobile telephone carrying the camera.

The mobile telephone according to the preferred embodiment of the present invention includes a camera body 100 that is a first body carrying the camera and a body section 200 that is a second body that axially supports the camera body 100 axially so as to rotate.

The camera body 100 has a lens 110 fixed on a side face of the camera body 100 and an imaging device (not shown in the figures), and the camera body 100 can rotate around a horizontal axis of the body section 200 as shown in the arrow in the FIG. 1. When imaging is not performed, the camera body 100 is rotated such that the side face on which the lens 110 is fixed is opposed to the body section 200, and the lens 110 is housed inside for the protection thereof. Conversely, when imaging is performed, the camera body 100 is rotated such that the side face on which the lens 110 is fixed and the side face on which a display means 230 and an operation input means 250 of the body section 200 are provided are in parallel to each other, and then the lens 110 is exposed to the outside. An image that comes through the lens 110 is converted to an electric signal by the imaging device to be transmitted to an image signal processing section carried in the body section 200 as an image signal.

The body section 200 axially supports the camera body 100 and places the camera body 100 so as to rotate. On a face of the body section 200, the display means 230 for displaying an image shot by the camera carried in the camera body 100 and the operation input means 250 for inputting an instruction for an operation of the camera are provided.

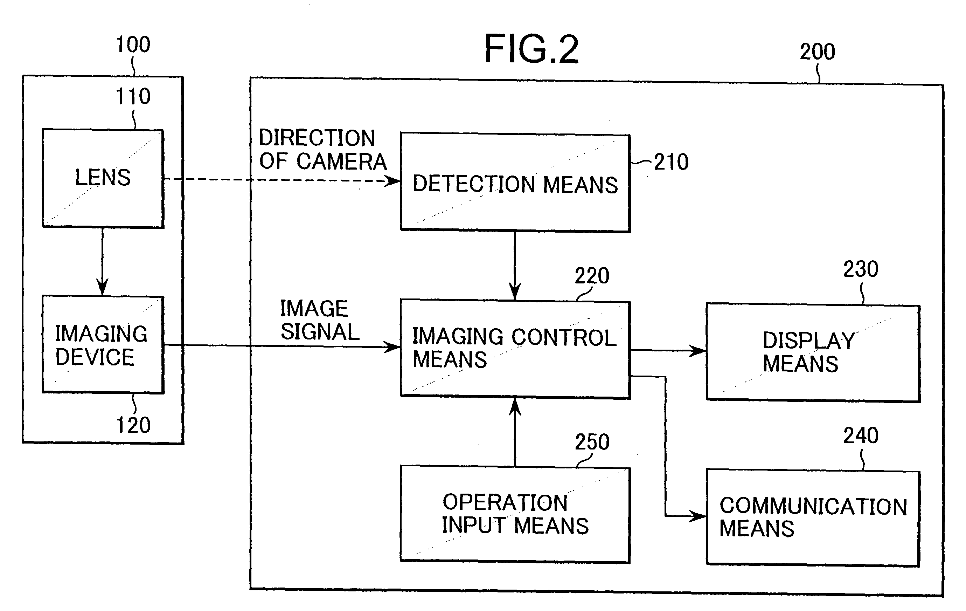

Next, an internal structure of the mobile telephone carrying the camera according to the present invention is described in the following. FIG. 2 is a block diagram of the mobile telephone carrying the camera according to the preferred embodiment of the present invention. The same elements as those of FIG. 1 are designated by the same reference numerals, and their descriptions are thus omitted.

The camera body 100 of the mobile telephone carrying the camera according to the preferred embodiment of the present invention is composed of the lens 110 for obtaining an optical image of an object of imaging and an imaging device 120 for converting the obtained optical image into an image signal. Moreover, the body section 200 is composed of detection means 210 for detecting the direction of the side face on which the lens 110 of the camera body 100 is fixed, i.e., the direction of the camera, imaging control means 220 for controlling imaging, display means 230 for displaying a shot image, communication means 240 for transferring an image signal as the occasion demands, and operation input means 250 for inputting a command from a user. In addition, processing sections that perform ordinary functions or processes of a mobile telephone is provided in the body section 200. Because these processing sections do not directly relate to the present invention, the descriptions of such sections are omitted here.

The detection means 210 detects the direction the side face on which the lens 110 of the camera body 100 is fixed is facing, and transmits the result of the detection to the imaging control means 220. The detection means 210 detects whether the camera section is on an inoperable status because the side face on which the lens 110 is fixed is directed to the the body section 200 owing to a rotation of the camera body 100, or the camera section is in an operable status because the side face is directed to the outside. The detection means 210 transmits the result of the detection to the imaging control means 220. Furthermore, whenever required, the detection means 210 detects whether the vertical direction of an image based on an image signal generated by the camera section matches the vertical direction of an actual image, and transmits the result of the detection to the imaging control means 220.

The imaging control means 220 controls each section that performs imaging processing according to the direction of the camera obtained from the detection means 210. When the side face on which the lens 110 is fixed is directed to the outside, namely the camera section is in its operable status, the imaging control means 220 starts imaging processing. For example, the imaging control means 220 makes the display means 230 display the image based on the image signal generated by the imaging device 120. In this case, when the imaging control means 220 obtains from the detection means 210 information concerning whether the vertical direction of the image based on the image signal obtained from the imaging device 120 matches the vertical direction of the actual image, the imaging control means 220 performs the processing in order to have the vertical direction of the image displayed on the display means 230 that matches the vertical direction of the actual image. Moreover, when the imaging control means 220 receives an image signal transfer command through the operation input means 250, the imaging control means 220 transmits the image signal through the communication means 240. On the other hand, when the result of detection of the detection means 210 indicates that the side face on which the lens 110 is fixed is directed to the inside, i.e., the camera section is in its inoperable status, the imaging control means 220 ends the imaging processing after a designated lapse of time. For example, the imaging control means 220 makes the display means 230 end displaying process. The reason why the imaging control means 220 waits for a designated lapse of time is to confirm that the camera body 100 does not further rotate to direct the camera section to the outside again or other similar events do not occur. Moreover, it is also possible that the imaging control means 220 does not automatically end the imaging, but also that the imaging control means 220 outputs a message to the display means 230 or the like and ends the imaging after receiving a command from the user through the operation input means 250.

The display means 230 displays the image based on the image signal shot by the camera section in conformity with the control of the imaging control means 220. Moreover, the display means 230 displays information such as a message as an occasion demands.

The communication means 240 performs the processing of transmitting the image signal to a designated destination in conformity with the control of the imaging control means 220 besides communication processing as a mobile telephone.

The operation input means 250 is a button operation section or the like for inputting a user's command. When an operation is performed, the operation input means 250 inputs an instruction according to the operation to the imaging control means 220.

The operation of the mobile telephone having such a configuration is described by reference to FIG. 1 again.

The camera body 100 carrying the camera section is axially supported around a horizontal axis on the top edge portion of the body section 200 so as to rotate. Consequently, the camera body 100 can arbitrarily be rotated as the arrow in the FIG. indicates.

When imaging is performed by means of the camera section, the camera body 100 is rotated such that the side face on which the lens 110 of the camera body 100 is fixed is positioned on the same plane as the side face on which the display means 230 of the body section 200 is provided and the lens 110 is directed to the outside. It is needless to say that the side face on which the lens 110 of the camera body 100 is fixed can arbitrarily be changed according to an imaging situation. When the detection means 210 detects the turning of the lens 110 to the outside by the rotation of the camera body 100, the detection means 210 notifies the turning to the imaging control means 220. Moreover, as the occasion demands, the detection means 210 detects the relation between the vertical direction of the image based on the image signal generated by the camera section and the vertical direction of the actual image to notify the detected relation to the imaging control means 220. The imaging control means 220 starts the imaging processing to perform the processing of the image signal generated by the imaging device 120. For example, the imaging display means 220 makes the display means 230 display the image based on the image signal. In this case, when the vertical direction of the image based on the image signal and the vertical direction of the actual image do not match each other, the imaging display means 220 performs the processing such that the vertical direction of the image based on the image signal is inverted upside down. Moreover, when the imaging display means 220 receives an instruction or command for transfer of the image signal through the operation input means 250, the imaging display means 220 transmits the image signal through the communication means 240.

On the other hand, when imaging is ended, the camera body 100 is rotated such that the side face on which the lens 110 of the camera body 100 is fixed is opposed to the top edge portion of the body section 200 and the lens 110 is housed inside. As a result, the lens 110 can be protected. When the detection means 210 detects the turning of the side face on which the lens 110 is fixed to the inside, thus the retraction of the lens 110 is detected, the imaging control means 220 ends the imaging processing after a designated lapse of time. Furthermore, as the occasion requires, the imaging control means 220 transmits a message to the display means 230 to inquire of a user whether the imaging processing should be ended or not. When an instruction of ending is input through the operation input means 250, the imaging control means 220 ends the imaging processing.

As described above, the mobile telephone carrying the camera therein according to the preferred embodiment of the present invention detects the rotation of the camera body 100 so as to enable imaging and automatically starts imaging processing. Consequently, the user can eliminate annoying operations for starting the imaging processing or other operations at the time of starting the imaging. Moreover, when the mobile telephone detects that a user rotates the camera body 100 to house or retract the lens 110 inside, the mobile telephone ends the imaging processing automatically or after an inquiry. Consequently, the lens 110 can be protected and a burden such as the operation at the time of ending of imaging or the like can be eliminated.

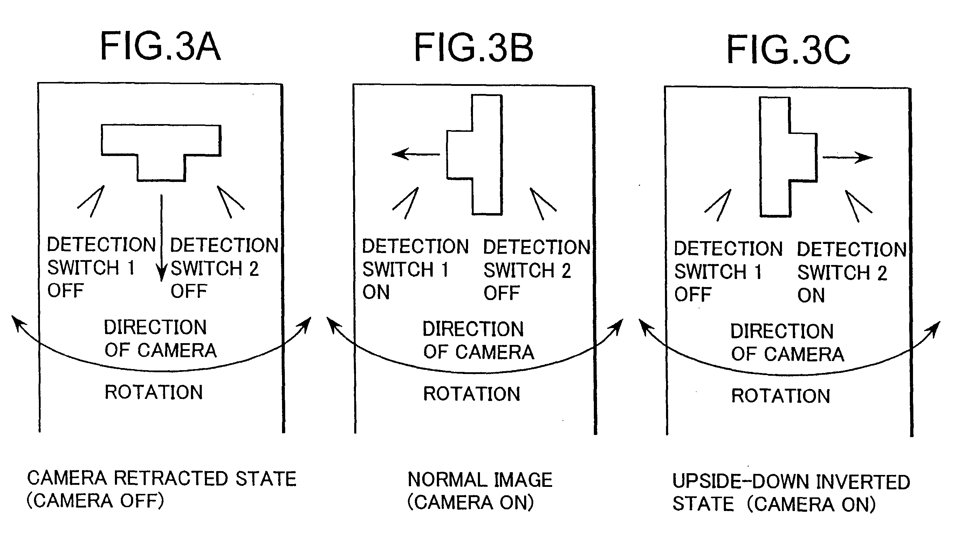

Next, a description is given to the detection means for detecting the direction of the camera of a portable information terminal carrying the camera. FIGs. 3A to 3C are explanatory views of rotations of the camera section in the portable information terminal carrying the camera according to a preferred embodiment of the present invention and the detection means thereof. FIGs. 3A to 3C are schematic diagrams representing a lateral view of the mobile telephone.

Here, the camera body 100 is shown by a convex shape, and it is supposed that the lens 110 is fixed at the end of the projecting portion of the convex shape. That is, the direction of the projecting portion of the convex shape is the direction of the camera. The body section 200 is provided with a detection switch 1 being a first detection means and a detection switch 2 being a second detection means along the rotation direction of the camera body 100.

The detection switch 1 is a detection switch that is turned on when the camera is in normal direction, i.e., a direction in which the vertical direction of the image based on the image signal to be generated matches the vertical direction of the actual image, and it is turned off when the camera is in any other direction. Moreover, the detection switch 2 is a detection switch that is turned on when the direction of the camera is inverted in the vertical direction, i.e. the direction in which the vertical direction of the image signal to be generated and the vertical direction of the actual image is inverted upside down in relation to each other, and it is turned off when the camera is in any other direction. The information concerning the turning on or off of the detection switch 1 and the detection switch 2 is transmitted to the imaging control means 220.

FIG. 3A shows a status in which the lens 110 is directed downward and the camera section is retracted or not in use. In this case, the detection switch 1 and the detection switch 2 are both turned off. When the turning off of the detection switch 1 and the detection switch 2 is informed to the imaging control means 220, the imaging control means 220 ends the imaging processing described above.

FIG. 3B shows a status in which the lens 110 is in normal direction and imaging is enabled. In this case, the detection switch 1 is turned on, and the detection switch 2 is turned off. When the status in which the detection switch 1 is turned on and the detection switch 2 is turned off is informed to the imaging control means 220, the imaging control means 220 starts the imaging processing described above. When the detection switch 1 is turned on, the image inversion processing is not performed.

FIG. 3C shows a status in which the lens 110 is inverted upside down in the vertical direction and imaging is enabled. In this case, the detection switch 1 is turned off, and the detection switch 2 is turned on. When the status in which the detection switch 1 is turned off and the detection switch 2 is turned on is informed to the imaging control means 220, the imaging control means 220 starts the imaging processing described above and, when the detection switch 2 is tuned on, the image inversion processing is performed.

As described above, the starting and the ending of imaging processing and the inversion of the image can be controlled according to the turning on and the turning off of the two detection switches. Consequently, a shot image can rightly be displayed on the display means 230 at a desired time without a complex setting or handling.

Although a portable information terminal carrying a camera is described as a mobile telephone in the aforesaid descriptions, a personal computer, a PDA and the like can also be used as the portable information terminal.

In addition, the aforesaid processing functions can be realized by a computer. In this case, the processing of the functions that are be held by the portable information terminal carrying a camera are described in a program recorded on a recording medium that can be read out by the computer. Then, by the execution of the program by the computer, the aforesaid processing can be realized by the computer. As the recording medium that can be read out by the computer, there is a magnetic recording device, a semiconductor memory and the like. In the case in which the recording medium is circulated in the market, it is possible to circulate the recording medium storing the program in a portable type recording medium such as a compact disc read-only memory (CD-ROM) or a floppy disk, or, also, it is possible to store the program in a computer connected to a network for the transfer of the program to another computer through the network. When a computer executes the program, the program is previously stored in a hard disc device or the like connected to the computer, and then the program is loaded in the main memory of the computer to be executed.

Although the invention has been described in its preferred form with a certain degree of particularity with reference to the preferred embodiments hereof, many changes, combinations and variations are possible therein. It is therefore to be understood that the present invention may be practiced other than as specifically described herein without departing from the scope thereof.

For example, although the preferred embodiment of the present invention described above describes a detecting means including two detectors, it is possible to set a detecting means having one detector in which only a position of inversion of image is detected, so that an image signal to be generated is inverted only when such position of inversion is detected. Further, it is possible to additionally provide a detector for the detecting means in which a position of inoperability, for example, a position in which the camera section faces the body of the information terminal itself.

## Claims

1. A portable information terminal including a camera section capable of imaging or shooting an image, said portable information terminal comprising:
a first body including said camera section;
a second body connected to said first body so as to turn/rotate in relation to said first body;
a detection means for detecting an exposure of said camera section to outside of said portable information terminal and for detecting a relation between a vertical direction of an image based on an image signal generated by said camera section and a vertical direction of an actual image;
a image control means for controlling imaging using said camera section according to a detection result of said detection means; and
an inversion means for inverting the vertical direction of the image based on the image signal generated by said camera section when said detecting means detects un-matching between the vertical direction of the image based on the image signal and the vertical direction of the actual image.

2. The portable information terminal according to claim 1, wherein said detection means comprises:
a first detection means for detecting turning of said first body in a direction in which the vertical direction of the image based on the image signal generated by said camera section and the vertical direction of the actual image match with each other; and
a second detection means for detecting turning of said first body in a direction in which the vertical direction of the image based on the image signal generated by said camera section and the vertical direction of the actual image are opposite to each other.

3. The portable information terminal according to claim 1, further comprising an inquiry means for inquiring a user whether the user ends imaging processing using said camera section, wherein
said imaging control means performs said inquiring to the user by controlling said inquiry means when said camera section is detected as not exposed by said detection means, and said imaging control means ends the imaging processing according to a result of said inquiry.

4. A portable information terminal including a camera section capable of imaging or shooting an image, said portable information terminal comprising:
a first body including said camera section;
a second body connected to said first body so as to turn/rotate in relation to said first body;
a detection means for detecting a position of said camera section, wherein said detection means detects: (a) an off position on which said camera section is not available for use, and (b) an inverting position on which said camera section inverts an image signal generated by said camera section;
a controlling means for controlling imaging using said camera section according to a detection result of said detection means; and
an inversion means for inverting said image signal when said detecting means detects said inverting position.

5. The portable information terminal according to claim 4, wherein said detection means comprising:
a first detection means for detecting said off position on which said camera section is not available for use; and
a second detection means for detecting said inverting position by detecting a position of said first body in relation to said second body in a direction in which the vertical direction of the image based on the image signal generated by said camera section and the vertical direction of the actual image are opposite to each other.

6. The portable information terminal according to claim 4, further comprising an informing means for informing a status of ending imaging processing using said camera section, wherein said controlling means performs said informing by controlling said informing means when said camera section is detected as not available for use by said detection means, and said imaging control means is capable of ending said imaging processing.

7. A portable information terminal including a camera section capable of imaging or shooting an image, said portable information terminal comprising:
a first body including said camera section;
a second body connected to said first body so as to rotate in relation to said first body;
a detector for detecting a position of said camera section, wherein said detector detects: (a) an off position on which said camera section is not available for use, and (b) an inverting position on which said camera section inverts an image signal generated by said camera section upside down;
a controller controlling imaging using said camera section according to a detection result of said detector; and
an image inverter inverting said image signal when said detecting means detects said inverting position.
